# EUROPEAN PATENT SPECIFICATION

(11) **EP 2 546 744 B1**
(45) Date of publication and mention of the grant of the patent: **10.05.2017**
(21) Application number: 10847445.3
(22) Date of filing: 11.03.2010
(51) Int. Cl.: G06F 9/48

(54) **SOFTWARE CONTROL DEVICE, SOFTWARE CONTROL METHOD, AND SOFTWARE CONTROL PROGRAM**
SOFTWARESTEUERUNGSVORRICHTUNG, SOFTWARESTEUERUNGSVERFAHREN UND SOFTWARESTEUERUNGSPROGRAMM
DISPOSITIF, PROCÉDÉ ET PROGRAMME DE COMMANDE DE LOGICIEL

(43) Date of publication of application: 16.01.2013
(73) Proprietor: Fujitsu Limited, Kawasaki-shi, Kanagawa 211-8588 (JP)
(72) Inventor: YAMASHITA, Koichiro, Kawasaki-shi Kanagawa 211-8588 (JP); YAMAUCHI, Hiromasa, Kawasaki-shi Kanagawa 211-8588 (JP); MIYAZAKI, Kiyoshi, Kawasaki-shi Kanagawa 211-8588 (JP); SUZUKI, Takahisa, Kawasaki-shi Kanagawa 211-8588 (JP); KURIHARA, Koji, Kawasaki-shi Kanagawa 211-8588 (JP)
(74) Representative: Wilding, Frances Ward
(86) International application number: PCT/JP2010/054152
(87) International publication number: WO 2011/111215

(56) References cited:
- JP-A- 2001 014 274
- JP-A- 2003 177 926
- JP-A- 2005 050 079
- JP-A- 2005 284 906
- JP-A- 2006 020 291
- US-A1- 2003 110 202

## Description

### TECHNICAL FIELD

The present invention is related to a software control device, a software control method, and a software control program for controlling software.

### BACKGROUND ART

A technology for rapidly starting software has been developed. Software cannot accommodate an operation from a user during start up, which makes the user frustrated. As a technology for rapidly starting software, for example, a technology is disclosed in which a given central processing unit (CPU) or CPUs are prioritized based on a table storing rules for assignment of CPUs (see, for example, Patent Document 1 cited below).

As a technology for sending an instruction to each CPU, a technology in which a cache-coherence request is broadcast to each CPU is disclosed (see, for example, Patent Document 2 cited below). Other than the technology disclosed in Patent Document 1, three technologies for starting new software having a high priority are disclosed, namely re-queuing, swap/push, and migrate.

Re-queuing is a technology in which an operating system (OS) that manages assignment of software returns software that has been executed to an execution queue of software, if new software has a high priority. The OS executes the software that has been returned to the execution queue again when the CPU resource becomes available.

Swap/push is a technology in which an OS pushes software that has been executed into storage if new software has a high priority. All information necessary for execution of the software is pushed, such as information on a memory context and/or a register(s) secured by the software. Similar to re-queuing, the OS executes the software that has been pushed again when the CPU resource becomes available.

Migrate is a technology in which schedulers of CPUs relocate software assigned to the CPUs since the load balance of the CPUs changes due to new software.

Patent Document 1: Japanese Laid-Open Patent Publication No. 2007-316710
Patent Document 2: Japanese Laid-Open Patent Publication No. 2005-141606

US2003/0110202 discloses a cellular phone that has a competition manager for controlling a competition between an inquiry task which inquires whether or not the inquiry task is allowed to start and a competing task having a competition with the inquiry task because these two of the tasks use a common lower-level functional unit. The competition manager is implemented by a competition management program which is independent from other application programs.

### DISCLOSURE OF INVENTION

### PROBLEM TO BE SOLVED BY THE INVENTION

According to the conventional technologies described above, however, there is a problem in that software that need not to be controlled are also controlled even if the technologies described in Patent Documents 1 and 2 are combined to broadcast to other CPUs that a process performed by a given CPU is prioritized. For example, to increase the execution priority of new software, the execution priority of other software that is unrelated to the new software and thus need not to be controlled becomes relatively low. There also is a problem in that re-queuing, swap/push, and migrate have heavy processing and thus, unsuitable for an environment such as an embedded environment where the processing power of a CPU(s) is not high.

To solve the problems of the conventional technologies described above, one object of the present invention is to provide a software control device, a software control method, and a software control program that can reduce the start-up period for necessary software.

### MEANS FOR SOLVING PROBLEM

According to an aspect of the invention, there is provided a software control device according to claim 1.

According to another aspect of the invention, there is provided a software control method according to claim 2.

According to another aspect of the invention, there is provided a computer-readable medium according to claim 3.

### EFFECT OF THE INVENTION

The software control device, the software control method, and the software control program can increase the relative ratio at which starting software access common resources, and reduce the start-up period for the software.

### BRIEF DESCRIPTION OF DRAWINGS

FIG. 1 is a block diagram of a hardware configuration of a software control device according to an embodiment;
FIG. 2 is a block diagram of a part of the hardware configuration, and software configuration of a software control device 100;
FIG. 3 is a block diagram of a functional configuration of the software control device 100;
FIG. 4 is a diagram of an example of contents of a common-resource database (DB) 202;
FIG. 5 is a diagram of an example of contents of a conflict-property table 301;
FIG. 6 is a diagram of an example of contents of a start-up/response period table 302;
FIG. 7A is a diagram of a control performed at the start-up of software (part 1);
FIG. 7B is a diagram of the control performed at the start-up of software (part 2);
FIG. 8 is a flowchart of a generation process of the common-resource DB 202;
FIG. 9A is a flowchart of a software control process (part 1); and
FIG. 9B is a flowchart of a software control process (part 2).

### BEST MODE(S) FOR CARRYING OUT THE INVENTION

A preferred embodiment of a software control device, a software control method, and a software control program according to the present invention is described in detail below with reference to the accompanying drawings.

### (Hardware Configuration of Software Control Device)

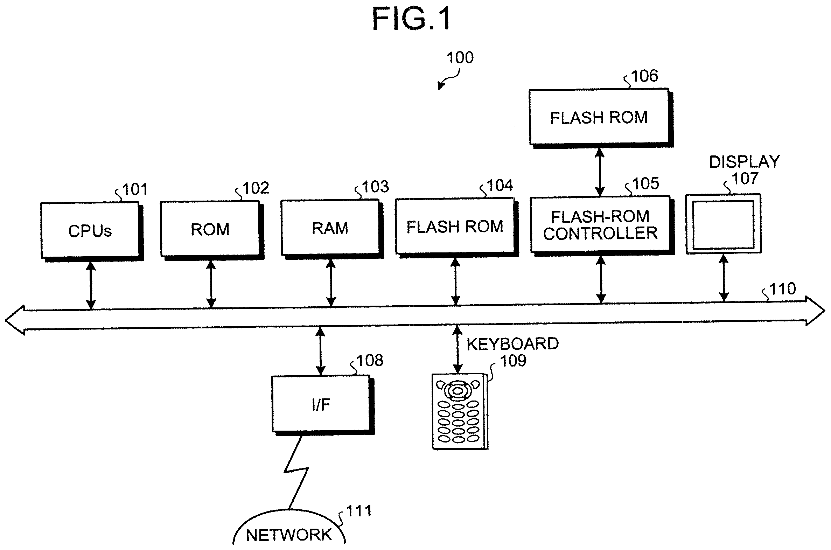

FIG. 1 is a block diagram of a hardware configuration of a software control device according to an embodiment. As depicted in FIG. 1, a software control device 100 includes CPUs 101, a read-only memory (ROM) 102, and a random access memory (RAM) 103. The software control device 100 also includes a flash ROM 104, a flash-ROM controller 105, and a flash ROM 106. The software control device 100 further includes a display 107, an interface (I/F) 108, and a keyboard 109 as an input/output device for a user and/or other device(s). These components are connected to each other via a bus 110.

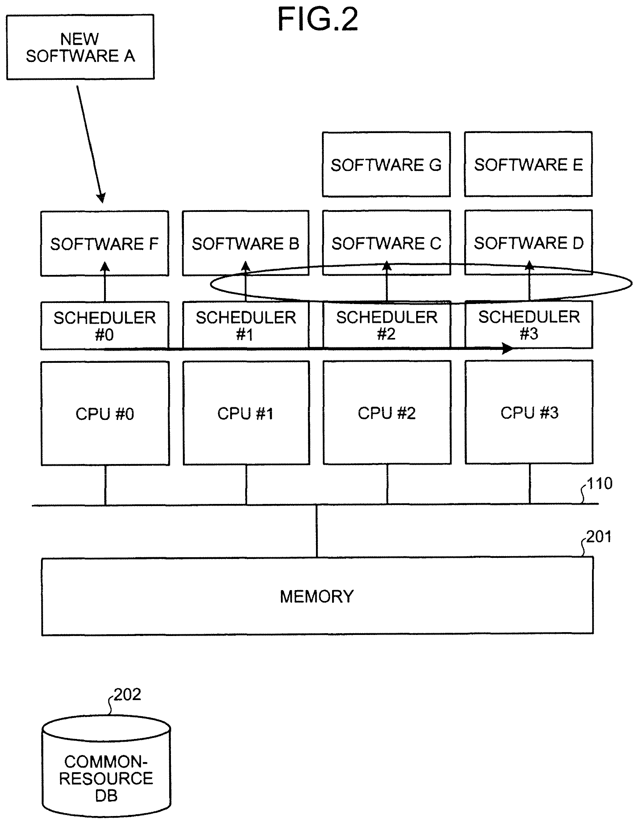

The CPUs 101 govern overall control of the software control device 100. The CPUs 101 are CPUs that are connected in parallel and each of which is a single-core processor. Details of the CPUs 101 are described later with reference to FIG. 2. As described above, the hardware configuration according to the embodiment is a multi-core processor system having multiple cores.

A multi-core processor system is a computer system that includes a processor(s) having multiple cores. The processor(s) may be a single processor having multiple cores or single-core processors connected in parallel, as long as the multi-core processor system has multiple cores. However, for simplicity of description, CPUs that are single-core processors connected in parallel are taken as an example in the present embodiment. Although a multi-core processor system is described in the present embodiment, the present invention can be applied to a single-core processor having a function of multiprogramming for parallel execution of software.

The ROM 102 stores therein programs such as a boot program. The RAM 103 is used as a work area of the CPUs 101. The flash ROM 104 stores therein system software such as OS, application software, etc. When the OS is updated, for example, the software control device 100 receives new OS via the I/F 108 and updates old OS stored in the flash ROM 104 to the new OS.

The flash-ROM controller 105 controls the reading/writing of data from/to the flash ROM 106 under the control of the CPUs 101. The flash ROM 106 stores therein the data written under the control of the flash-ROM controller 105. The data are image data, video data, etc. that are obtained by a user of the software control device 100 via the I/F 108. For example, a memory card or an SD card can be employed as the flash ROM 106.

The display 107 displays a cursor, an icon(s), a tool box(es), and data such as a document, an image, and functional information. For example, a TFT liquid-crystal display can be employed as the display 107.

The I/F 108 is connected to a network 111 such as a local area network (LAN), a wide area network (WAN), and the Internet via a communication line, and to other devices through the network 111. The I/F 108 administers an internal interface with the network 111 and controls the input/output of data from/to an external device(s). For example, a modem or a LAN adapter can be employed as the I/F 108.

The keyboard 109 includes keys for inputting numerals, various instructions, etc. and performs the input of data. Alternatively, a touch-panel-type input pad or numeric keypad, etc. can be adopted.

FIG. 2 is a block diagram of a part of the hardware configuration, and software configuration of the software control device 100. The CPUs 101 and a memory 201 are depicted in FIG. 2 as hardware configuration necessary for explaining software configuration described later. The CPUs 101 according to the present embodiment includes multiple CPUs, namely CPU #0, CPU #1, CPU #2, and CPU #3. The CPUs 101 include two or more CPUs, but alternatively, a single CPU may be adopted. Each CPU and the memory 201 are connected to each other via the bus 110. The memory 201 is a high-speed main memory directly accessed by the CPUs 101, and corresponds to the ROM 102, the RAM 103, and the flash ROM 104.

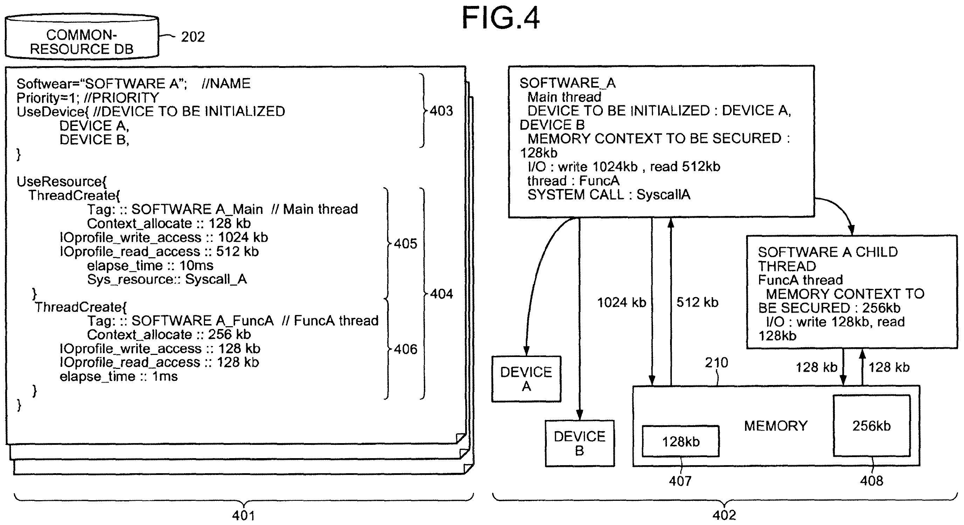

Each CPU having the hardware configuration described above refers to a common-resource database (DB) 202, and executes software A to software G described later. The common-resource DB 202 describes usage information on a common resource(s) accessed by software, such as a device(s) accessed by the software, and the memory 201. Details of the common-resource DB 202 are described later with reference to FIG. 4.

The device(s) is a low-speed auxiliary memory such as the flash ROM 106. The device(s) can be another memory (although not depicted in FIG. 1), or a device such as a scanner and a printer connected to the I/F 108 and having the input/output function. The software control device 100 accesses a RAM in the device connected to the I/F 108.

The CPUs execute multiple software sequentially by executing schedulers that are a function of the OS. For example, CPU #0 executes software F by scheduler #0. Similarly, CPU #1 executes software B by scheduler #1. CPU #2 executes software C and software G by scheduler #2. CPU #3 executes software D and software E by scheduler #3.

If software A is newly executed in this state, CPU #0 starts software A and broadcasts a message indicating the start-up of software A to CPU #0 to CPU #3.

### (Functional Configuration of Software Control Device 100)

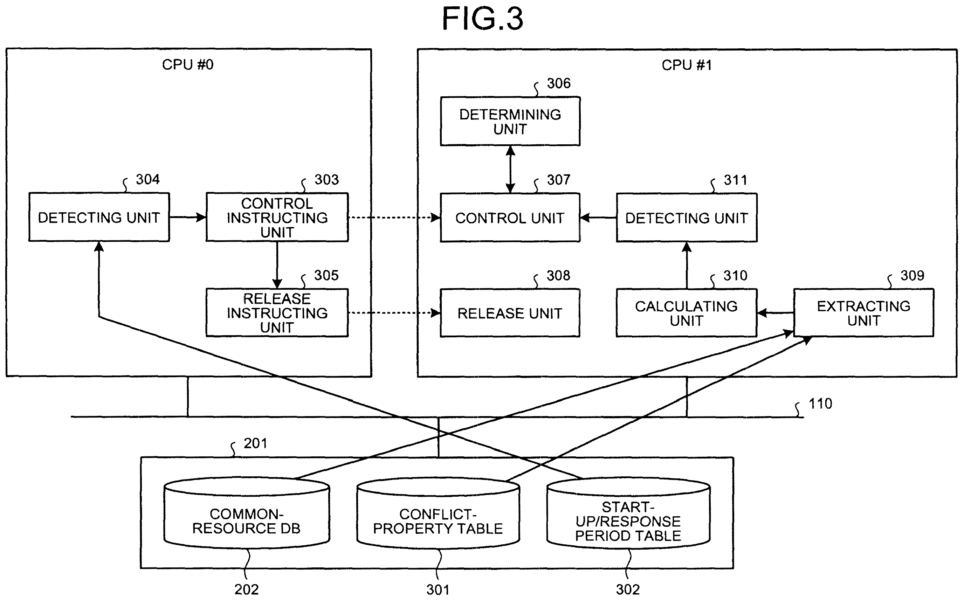

A functional configuration of the software control device 100 is described next. FIG. 3 is a block diagram of a functional configuration of the software control device 100. The software control device 100 includes a control instructing unit 303, a detecting unit 304, a release instructing unit 305, a determining unit 306, a control unit 307, a release unit 308, an extracting unit 309, a calculating unit 310, and a detecting unit 311. These functions as a controller (the control instructing unit 303 to the detecting unit 311) are implemented by, for example, the CPUs 101 executing a program stored in storage such as the ROM 102, the RAM 103, and the flash ROM 104 depicted in FIG. 1. Alternatively, the functions may be implemented by another CPU(s) executing the program via the I/F 108.

The software control device 100 can access the common-resource DB 202, a conflict-property table 301, and a start-up/response period table 302. The common-resource DB 202 stores usage state of the common resources such as the memory 201 and the device(s) described above. Details of the common-resource DB 202 are described later with reference to FIG. 4.

The common-resource DB 202, the conflict-property table 301, and the start-up/response period table 302 are stored in the memory 201 as depicted, but alternatively, may be stored in storage other than the memory 201 such as the flash ROM 106, and configuration may be such that the software control device 100 transfers only necessary data to the memory 201.

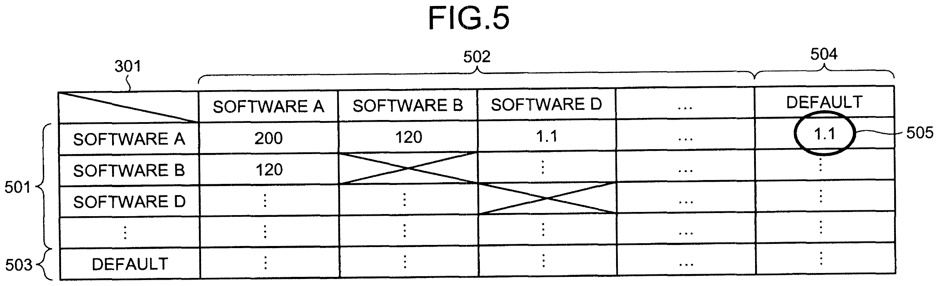

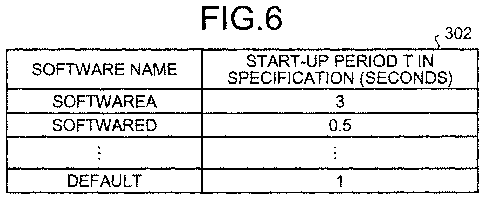

The conflict-property table 301 is a table that stores conflict property σ that is a coefficient indicating performance deterioration in a conflict state between software. Details of the conflict-property table 301 are described later with reference to FIG. 5. The start-up/response period table 302 is a table that stores the start-up period for each software in the worst case described in the specification. Details of the start-up/response period table 302 are described later with reference to FIG. 6.

The control instructing unit 303 to the release instructing unit 305 depicted in FIG. 3 are implemented by CPU #0 functioning as a master kernel. On the other hand, the determining unit 306 to the detecting unit 311 are implemented not only by CPU #1 to CPU #3 functioning as a slave kernel, but also by CPU #0. Thus, CPU #0 has functions of the control instructing unit 303 to the detecting unit 311.

The control instructing unit 303 controls/instructs running software to be temporarily suspended by sending to the slave kernel(s), a request to control a device(s) to be inhibited (hereinafter, "device control request"). The control instructing unit 303 may control/instruct the execution priority of the running software to be decreased by sending a request to control the execution priority to be decreased (hereinafter, "priority control request"). The control instructing unit 303 may control/instruct the execution priority to be decreased if the detecting unit 304 detects that the start-up of starting software has not been completed and a common resource being accessed by the starting software is a given common resource. Herein, the given common resource is the memory 201. The device control request and the priority control request include identification information of the common resource accessed by the starting software.

For example, the control instructing unit 303 of the software control device 100 sends a control instruction to the slave kernel(s) to temporarily suspend the running software. The control instruction may be stored in storage such as the RAM 103 and the flash ROM 104.

The detecting unit 304 detects that the start-up of the starting software has not been completed despite a given start-up period having elapsed since the commencement of the start-up. Herein, the given start-up period is the start-up period T described in the specification and stored in the start-up/response period table 302. For example, the software control device 100 detects starting software of which start-up period T described in the specification is 1 second and of which start-up has not been completed despite 1 second having elapsed since the commencement of the start up. Information on the detected software is sent to the control instructing unit 303, and may be stored in storage such as the RAM 103 and the flash ROM 104.

The release instructing unit 305 instructs, after the start-up of the starting software has been completed, to release the control of the running software that has been controlled by the control instructing unit 303 by sending a control release request. For example, the release instructing unit 305 of the software control device 100 sends a control release request to release the temporal suspension of the running software. The control release request is sent to the release unit 308, and may be stored in storage such as the RAM 103 and the flash ROM 104.

The determining unit 306 determines, using the identification information of the starting software notified by the control instructing unit 303, whether the starting software and the running software are accessing the same common resource.

For example, a case is assumed where the control instructing unit 303 of the software control device 100 has sent the identification information of the flash ROM 106 accessed by the starting software. If the running software also is accessing the flash ROM 106, the determining unit 306 of the software control device 100 determines that the same common resource is being accessed. The result of the determination is sent to the control unit 307, and may be stored in storage such as the RAM 103 and the flash ROM 104.

The control unit 307 controls the running software to be temporarily suspended if the control unit 307 receives the device control request from the control instructing unit 303 and the determining unit 306 determines that the same common resource is being accessed. The control unit 307 may control the execution priority of the running software to be decreased if the control unit 307 receives the priority control request from the control instructing unit 303. The control unit 307 may control the execution priority of the running software to be decreased if the control unit 307 receives the priority control request and the detecting unit 311 detects that an estimated start-up period for the starting software exceeds the given start-up period.

For example, the software control device 100 controls the running software to be temporarily suspended if the device control request is received from the control instructing unit 303 and the determining unit 306 determines that the same common resource is being accessed. Information on the software that has been temporarily suspended or of which execution priority has been decreased is stored in storage such as the RAM 103 and the flash ROM 104.

After receiving the control release request indicating the completion of the start-up of the starting software from the release instructing unit 305, the release unit 308 releases the control of the running software that has been controlled by the control unit 307. For example, the software control device 100 receives the control release request from the release instructing unit 305, and releases the control based on the information on the software that has been temporarily suspended or of which execution priority has been decreased. Information on the released software may be stored in storage such as the RAM 103 and the flash ROM 104.

The extracting unit 309 extracts the start-up period for the starting software in a non-conflict state, and a coefficient indicating performance deterioration in a conflict state between the starting software and the running software. The start-up period for the starting software in the non-conflict state is stored in the common-resource DB 202 that also stores the start-up period for software in the non-conflict state. The coefficient indicating the performance deterioration in the conflict state between software is stored in the conflict-property table 301.

For example, the software control device 100 extracts the start-up period t of starting software A in the non-conflict state from the common-resource DB 202. The software control device 100 also extracts from the conflict-property table 301, conflict property σ indicating the performance deterioration in the conflict state between the starting software A and software being executed on the slave kernel(s). The extracted data are stored in storage such as the RAM 103 and the flash ROM 104.

The calculating unit 310 calculates the estimated start-up period for the starting software in the conflict state based on the start-up period and the coefficient that are extracted by the extracting unit 309. The extracted start-up period is the start-up period t in the non-conflict state, and the extracted coefficient is the conflict property σ indicating the performance deterioration in the conflict state between the starting software and the running software.

For example, if the start-up period is 10 milliseconds and the coefficient is 120, the software control device 100 calculates the estimated start-up period for the starting software in the conflict state as follows: start-up period × coefficient=10×120=1.2 seconds. The calculated data are stored in storage such as the RAM 103 and the flash ROM 104.

The detecting unit 311 detects that the estimated start-up period for the starting software in the conflict state calculated by the calculating unit 310 exceeds a given start-up period. The given start-up period is the start-up period T described in the specification and stored in the start-up/response period table 302. The detecting unit 311 is executed when the detecting unit 304 detects that the start-up has not been completed and the control is transferred from the control instructing unit 303 to the control unit 307.

For example, T<σt if the estimated start-up period σt of the starting software in the conflict state calculated by the calculating unit 310 is 1.2 seconds and the start-up period T described in the specification is 1 second. The software control device 100 notifies the control unit 307 of the detection result. The detection result is stored in storage such as the RAM 103 and the flash ROM 104.

As described above, the functional units are distributed to the master kernel that mainly processes the starting software and the slave kernel(s) that processes the running software. Alternatively, the slave kernel(s) of the software control device 100 may obtain information on the starting software to implement all functional units by the slave kernel(s).

FIG. 4 is a diagram of an example of contents of the common-resource DB 202. An example of contents of the common-resource DB 202 is depicted in a portion 401, and further depicted in a portion 402 as blocks. The name of software, the execution priority of the software, and the name(s) of a device(s) initialized by the software are described in an area 403. Information on each thread is described in an area 404. Information on a main thread is described in an area 405, and information on a sub-thread (i.e., FuncA thread) is described in an area 406.

Each property depicted in the area 405 is described next. "Tag" property represents the name of the thread. "Context_allocate" property represents the memory context secured in the memory 201 by the thread. The secured memory context is used as a stack area for execution of the thread, for example. Information on function calls and/or values of local variables of the function is stored in the stack area.

"IOprofile_write_access" property and "IOprofile_read_access" property represent the amount of the memory 201 accessed by the thread. "IOprofile_write_access" property represents the size of data written by the thread, and "IOprofile_read_access" property represents the size of data read by the thread.

"Elapse_time" property represents the time from the commencement of the start-up of the thread until the time at which the memory context indicated by "Context_allocate" property is secured. The value of "elapse_time" property is the start-up period t in the non-conflict state. "Sys_resource" property represents a system call(s) called by the thread.

The contents of the common-resource DB 202 are also depicted as blocks in the portion 402. Software A accesses device A and device B, secures a memory context 407 of 128K bytes in the memory 201, writes data of 1024K bytes, and reads data of 512K bytes. Software A child thread secures a memory context 408 of 256K bytes in the memory 201, writes data of 128K bytes, and read data of 128K bytes.

Device A and device B are, for example, the flash ROM 106 or an external storage connected to the I/F 108 (not depicted in FIG. 1). The storage may be a printer connected to the software control device 100 and used by a thread, for example, since data are written into a RAM in the printer.

FIG. 5 is a diagram of an example of contents of the conflict-property table 301. The conflict-property table 301 stores the conflict property σ that is a coefficient indicating the performance deterioration in the conflict state between software. The conflict property σ of the conflict-property table 301 is the value of the performance deterioration when software 502 is started during execution of software 501.

The conflict property σ is the processing time in the conflict state assuming that the processing time in the non-conflict state is 1, and the larger the value is, the more the performance deteriorates. The conflict property σ can be calculated by executing each software repeatedly by a device that can simulate the software control device 100. Alternatively, the software control device 100 may calculate the conflict property if the software control device 100 has an environment for calculating the conflict property σ.

For example, it is assumed that software A is a Web browser, software B is a mail software, and software D is a phone-directory call. The conflict property σ if the software control device 100 starts software B during execution of software A is "120" as depicted in FIG. 6. Similarly, the conflict property σ if the software control device 100 starts software D during execution of software A is "1.1."

The conflict property σ significantly differs as described above consequent to the Web browser and the mail software accessing the same network interface card (NIC) via the I/F 108, for example, and obtaining information from the network 111. Thus, both software access the same device, and are likely to cause a conflict. Furthermore, both software process the obtained data according to transmission control protocol/Internet protocol (TCP/IP). Thus, both software use the system resource(s) for TCP/IP, and are likely to cause conflict.

On the other hand, conflict between the Web browser and the phone-directory call can be caused only by access to the memory 201, and is not likely to arise. Thus, the conflict property σ significantly differs depending on the common resource(s) used by software.

If simultaneous execution of software (for example, software A) is permitted in the specification, the simulation device measures the conflict property σ between the software as depicted in FIG. 5. On the other hand, if simultaneous execution of software (for example, software B and software D) is not permitted in the specification, the simulation device need not to measure the conflict property σ.

If the result of the measurement indicates that most of the conflict property σ between software have the same value, the software control device 100 may have a field for storing the value, such as a "DEFAULT" line 503 and a "DEFAULT" column 504. If the software control device 100 starts software that is not described in columns 502 during execution of software A, the conflict property σ in this case is "1.1" as depicted in a cell 505 of the "DEFAULT" column 504.

FIG. 6 is a diagram of an example of contents of the start-up/response period table 302 that includes two fields, namely the "NAME OF SOFTWARE" field for the name of software, and the "START-UP PERIOD T IN SPECIFICATION" field for the start-up period for each software in the worst case described in the specification.

For example, as depicted in FIG. 6, the start-up period for software A is set to 3 seconds and the start-up period for software D is set to 0.5 seconds. The start-up period may be set for all software. However, if most software have the same start-up period, the software control device 100 may have a "DEFAULT" line 601 storing the start-up period for all software for which the start-up period is not set.

For example, the start-up period for software A is set to 3 seconds, which is longer than the 1-second default value, since software A is a Web browser that is generally large software and is not frequently started. On the other hand, the start-up period for software D is set to 0.5 seconds, which is shorter than the 1-second default value, since the software D is a phone-directory call and is frequently called and thus, the wait time for a user needs to be reduced.

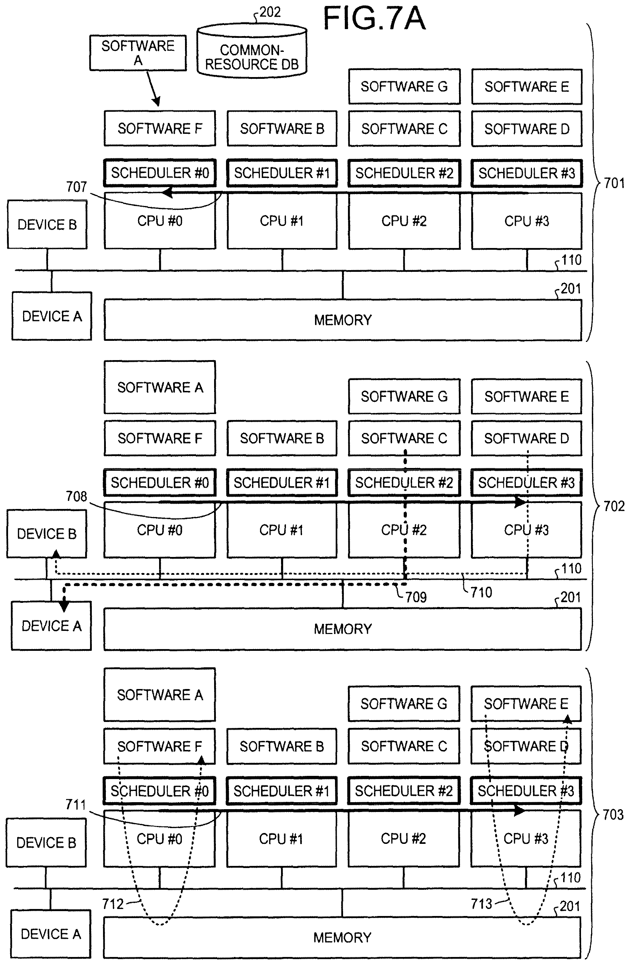

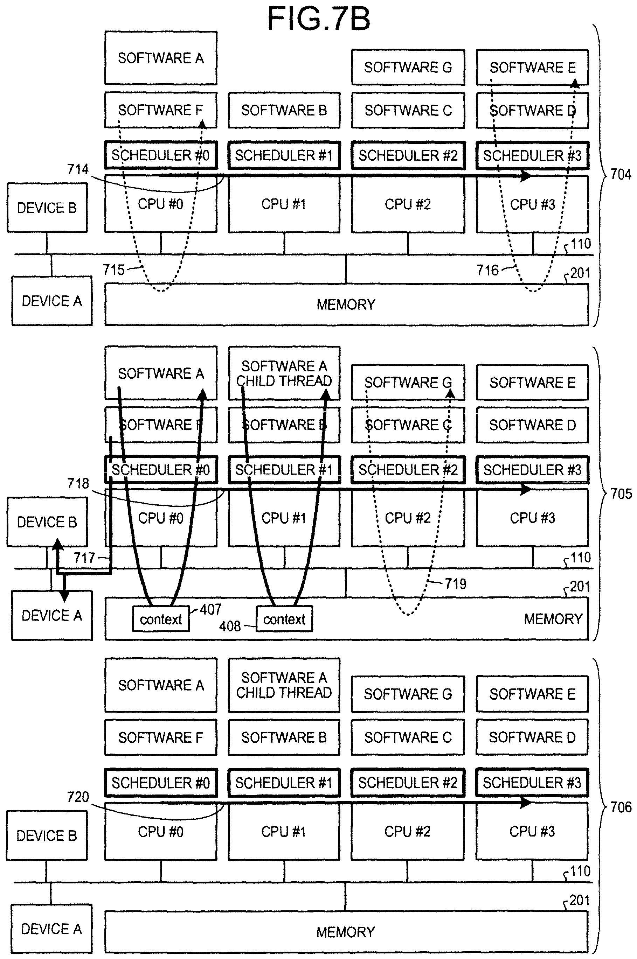

FIGs. 7A and 7B are diagrams of a control performed at the start-up of software. A state 701 depicted in FIG. 7A is a state immediately before the software control device 100 starts new software A. The software control device 100 collects load information of each CPU by a message 707, and assigns a load to an optimal CPU (load distribution). The software control device 100 according to the present embodiment assigns the main thread of software A to CPU #0, and assigns the child thread started by software A to CPU #1.

A state 702 depicted in FIG. 7A is a state where the software control device 100 assigns the main thread of software A to CPU #0. After the assignment, the software control device 100 broadcasts to CPU #0 to CPU #3, a message 708 indicating that software A accesses device A and device B.

The CPU #0 to CPU #3 receive the message 708. CPU #0 and CPU #1 do nothing since neither CPU #0 nor CPU #1 executes software that is accessing device A or device B. On the other hand, CPU #2 temporarily suspends the execution of software C that is accessing device A through an access path 709. Similarly, CPU #3 temporarily suspends the execution of software D that is accessing device B through an access path 710.

A state 703 depicted in FIG. 7A is a state where the software control device 100 temporarily suspends software that is accessing a device(s). The software control device 100 broadcasts to CPU #0 to CPU #3, a message 711 indicating that software A accesses the system resource or the library resource.

CPU #0 to CPU #3 receive the message 711. CPU #0 decreases the execution priority of software F that is accessing the system resource through an access path 712. On the other hand, CPU #1 and CPU #2 do nothing since neither CPU #1 nor CPU #2 executes software that is accessing the system resource or the library resource. CPU #3 decreases the execution priority of software E that is accessing the system resource through an access path 713.

As a specific example of a conflict in a system resource without a conflict in a device, it is assumed that software A is a Web browser and software E is edit software for a bookmark having the extensible markup language (xml) format.

There is no conflict in a device in this case since software E does not use the network 111. However, software E needs to parse the xml to read the bookmark and thus, accesses a system resource capable of xml parse. Similarly, software A accesses the system resource capable of xml parse since software A can read a Web page of xml format. As a result, software A and software E do not cause a conflict in a device, but cause a conflict in a system resource.

A state 704 depicted in FIG. 7B is a state where the software control device 100 decreases the execution priority of software that is accessing the system resource or the library resource. The software control device 100 broadcasts to CPU #0 to CPU #3, a message 714 indicating that software A accesses the memory 201.

CPU #0 to CPU #3 receive the message 714. CPU #0 decreases the execution priority of software F that is accessing the memory 201 through an access path 715. On the other hand, CPU #1 and CPU #2 do nothing since neither CPU #1 nor CPU #2 executes software that is accessing the memory 201. CPU #3 decreases the execution priority of software E that is accessing the memory 201 through an access path 716.

A state 705 depicted in FIG. 7B is a state where the software control device 100 performs initialization for software A and starts the child thread after decreasing the execution priority of the software that is accessing the memory 201, thereby initializing device A and device B through an access path 717 and securing the memory context 407. The software A child thread is started by software A, and assigned to CPU #1. CPU #0 broadcasts to CPU #0 to CPU #3, a message 718 indicating that the software A child thread is started.

CPU #0 to CPU #3 receive the message 718. CPU #0, CPU #1, and CPU #3 do nothing since none of CPU #0, CPU #1, and CPU #3 executes software that is accessing a common resource accessed by the software A child thread. CPU #2 decreases the execution priority of software G that is accessing the memory 201 through an access path 719. The software A child thread secures the memory context 408.

Software A are executed with the highest priority until the start-up of software A is completed. Software such as software B that does not access the common resource accessed by software A and thus does not cause any conflict, is not subject to temporal suspension or a decrease of the execution priority, and is executed as usual.

A state 706 depicted in FIG. 7B is a state where the software control device 100 completes the start-up of software A. The start-up is completed at the timing at which software A finishes initializing the device(s) and securing the memory context. Upon the completion of the start-up of software A, CPU #0 broadcasts a message 720 indicating the completion of the start-up of software A.

CPU #0 to CPU #3 receive the message 720. Each CPU releases the control of software that has been temporarily suspended or of which execution priority has been decreased. For example, CPU #0 causes the execution priority of software F to return to the initial value. CPU #1 does nothing since there is no software that has been temporarily suspended or of which execution priority has been decreased on CPU #1. CPU #2 releases the temporal suspension of software C, and causes the execution priority of software G to return to the initial value. CPU #3 releases the temporal suspension of software D, and causes the execution priority of software E to return to the initial value.

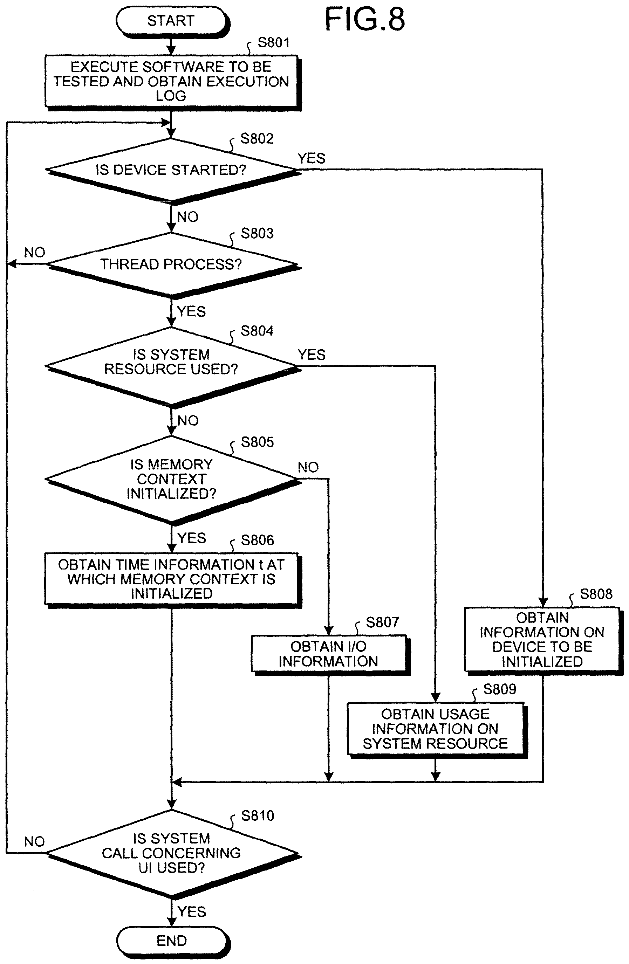

FIG. 8 is a flowchart of a generation process of the common-resource DB 202. The generation process according to the present embodiment is described to be executed by the software control device 100, but may be executed by a device that can simulate the software control device 100. As a preprocess of the generation process, software to be subjected to the generation process is compiled to executable code with profile tag.

The software control device 100 executes software to be tested and obtains an execution log (step S801). In the subsequent processes, the execution log is referred to from the top thereof. Thus, a device that executes the subsequent processes may be a general-purpose computer device capable of data input/output for referring to the execution log. The software control device 100 refers to the execution log and checks whether a device(s) is started (step S802). If so (step S802: YES), the software control device 100 obtains information on a device(s) to be initialized (step S808), and stores the information into "UseDevice" property in the area 403 of the common-resource DB 202.

The software control device 100 checks whether a system call(s) concerning UI is used (step S810). If so (step S810: YES), the software control device 100 ends the process. The software control device 100 also ends the process when the entire execution log has been read. Alternatively, the software control device 100 may end the process when detecting on the execution log, a transition to a state where an interruption handler waits for user input.

The system call concerning UI is a system call for obtaining information about input on the display 107 from a user through a mouse, or information about input through the keyboard 109. At step S810, the start-up of software is determined to be completed since the system call indicates the completion of the start-up of the software to be tested and a transition to a state for handling instruction from the user. If no system call concerning UI is used (step S810: NO), the software control device 100 transitions to step S802 again.

If no device is started (step S802: NO), the software control device 100 checks whether a thread process is present (step S803). The software control device 100 processes each thread after step S803. If no thread is present (step S803: NO), the software control device 100 transitions to step S802. If a thread is present (step S803: YES), the software control device 100 checks whether a system resource is used (step S804).

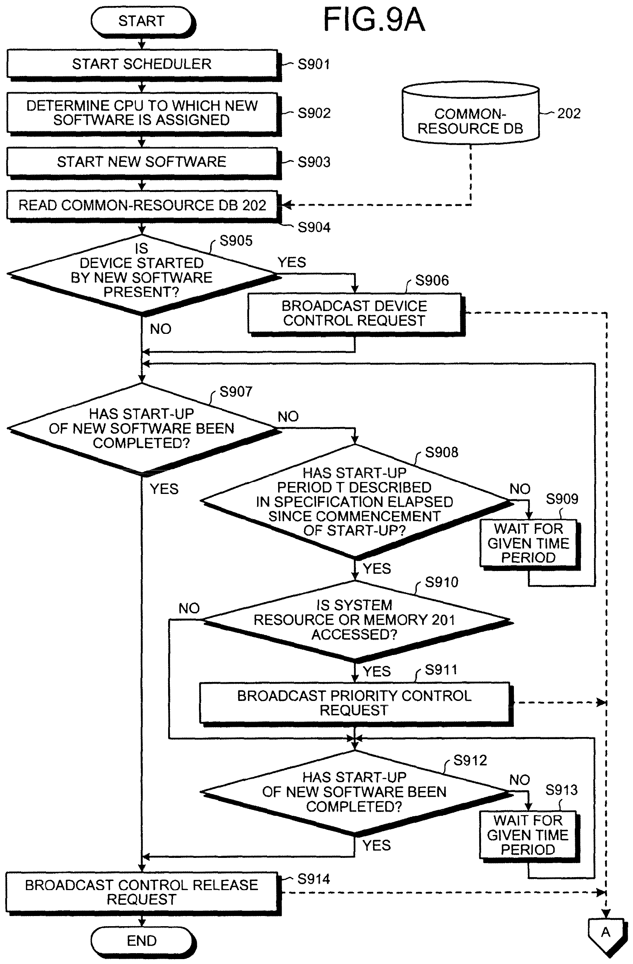

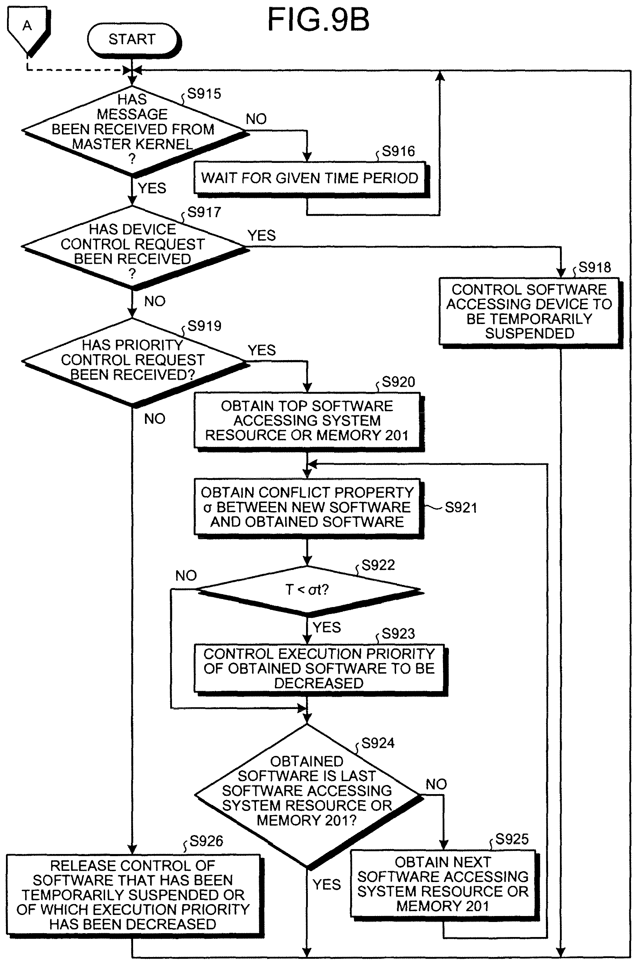

The result of determination at step S804 may be "YES" even when a library resource is used instead of the system resource. It is assumed in the flowcharts depicted in FIGs. 8, 9A, and 9B that the library resource is a part of the system resource. If the system resource is used (step S804: YES), the software control device 100 obtains usage information on the system resource (step S809), and stores the information into "Sys_resource" property in the common-resource DB 202 depicted in FIG. 4. The software control device 100 then transitions to step S810.

If no system resource is used (step S804: NO), the software control device 100 checks whether the memory context is initialized (step S805). If so (step S805: YES), the software control device 100 obtains time information t at which the memory context is initialized (step S806), and stores the time information t into "elapse_time" property in the common-resource DB 202 depicted in FIG. 4. The software control device 100 then transitions to step S810.

If the memory context is not initialized (step S805: NO), the software control device 100 obtains I/O information indicating access to the memory 201 (step S807), and stores the information into "IOprofile_write_access" property and "IOprofile_read_access" property in the common-resource DB 202 depicted in FIG. 4.

The software control device 100 transitions to step S810. After step S810, the software control device 100 sets the maximum value among "elapse_time" properties of all threads to "elapse_time" property of the main thread, which is the start-up period t of the software in the non-conflict state.

FIGs. 9A and 9B are flowcharts of a software control process. FIG. 9A depicts a message sending process performed by the master kernel, i.e., CPU #0 in the present embodiment. CPU #0 starts the scheduler (step S901), for example, scheduler #0. CPU #0 also receives a message from CPU #1 to CPU #3 and collects load information of the CPUs.

CPU #0 determines, based on the collected load information, a CPU to which new software is assigned (step S902). The determined CPU starts the new software (step S903), and CPU #0 reads a record concerning the new software from the common-resource DB 202 (step S904).

CPU #0 refers to the common-resource DB 202, and checks whether a device(s) started by the new software is present (step S905). If so (step S905: YES), CPU #0 broadcasts the device control request to CPU #0 to CPU #3 (step S906). If not (step S905: NO) or after step S906, CPU #0 checks whether the start-up of the new software has been completed (step S907).

If not (step S907: NO), CPU #0 checks whether the start-up period T described in the specification has elapsed since the commencement of the start-up of the new software (step S908). If not (step S908: NO), CPU #0 waits for a given time period (step S909) and transitions to step S907.

If so (step S908: YES), CPU #0 checks if the starting software accesses the system resource or the memory 201 (step S910). If the starting software accesses the system resource or the memory 201 (step S910: YES), CPU #0 broadcasts the priority control request to CPU #0 to CPU #3 (step S911).

The priority control request includes information on the starting software, or the start-up period T described in the specification and the start-up period t in the non-conflict state. Generally, software (in particular, application software) accesses the system resource or the memory 201. Thus, the software control device 100 may omit step S910 for simplicity, by assuming the result of the determination at step S910 to be always "YES."

After the broadcast, or if neither the system resource nor the memory 201 is used (step S910: NO), CPU #0 checks again whether the start-up of the new software has been completed (step S912). If not (step S912: NO), CPU #0 waits for a given time period (step S913) and returns to step S912. If the start-up of the new software has been completed (step S907: YES, step S912: YES), CPU #0 broadcasts the control release request to CPU #0 to CPU #3 (step S914).

FIG. 9B depicts a message receiving process performed by all slave kernels that receive the message, namely CPU #0 to CPU #3 in the present embodiment. However, only CPU #1 is described as the subject of the process in the following description.

CPU #1 checks whether a message has been received from the master kernel (step S915). The message is a message sent from the master kernel at step S906, step S911, or step S914. If not (step S915: NO), CPU #1 waits for a given time period (step S916) and returns to step S915.

If a message has been received (step S915: YES), CPU #1 checks whether the device control request has been received (step S917). If so (step S917: YES), CPU #1 controls software that is accessing the device(s) to be temporarily suspended (step S918).

If a device control request has not been received (step S917: NO), CPU #1 checks whether the priority control request has been received (step S919). If so (step S919: YES), CPU #1 obtains software that is accessing the system resource or the memory 201 (step S920). The priority control request may include information on the starting software, or the start-up period T described in the specification and the start-up period t in the non-conflict state. If the priority control request includes only the information on the starting software, CPU #1 obtains the start-up period T described in the specification and the start-up period t in the non-conflict state based on the information on the starting software.

CPU #1 obtains the conflict property σ between the new software and the obtained software from the conflict-property table 301 (step S921), and checks whether the start-up period T described in the specification is smaller than the estimated start-up period σt in the conflict state (step S922). If so (step S922: YES), CPU #1 controls the execution priority of the obtained software to be decreased (step S923).

T and σt are used at step S922. Alternatively, other property(ies) stored in the common-resource DB 202 may be used for the determination. For example, the software control device 100 calculates the sum of "IOprofile_write_access" property and "IOprofile_read_access" property, and divides the sum by the start-up period t in the non-conflict state, thereby calculating the access speed with respect to the memory 201. The software control device 100 compares the obtained access speed and the current memory-access speed of the slave kernel, and if the former is larger than the latter, determines that a conflict is occurring in the slave kernel and controls the execution priority to be decreased.

After step S923 or when T≥σt (step S922: NO), CPU #1 checks whether the obtained software is the last software that is accessing the system resource or the memory 201 (step S924). If not (step S924: NO), CPU #1 obtains the next software that is accessing the system resource or the memory 201 (step S925), and transitions to step S921. If the obtained software is the last software that is accessing the system resource or the memory 201 (step S924: YES), CPU #1 transitions to step S915.

If a priority control request has not been received (step S919: NO), which means a control release request has been received, CPU #1 releases the control of the software that has been temporarily suspended or of which execution priority has been decreased (step S926), and transitions to step S915.

As described above, the software control device, the software control method, and the software control program suspend software that is accessing a common resource(s) accessed by starting software for a given time period. Thus, the ratio at which the starting software accesses the common resource can be increased, and the start-up period for the starting software can be reduced.

The software control device may decrease the execution priority of running software that is accessing the common resource. Thus, the start-up period for the starting software can be reduced, with the running software still being executed.

The software control device detects that the start-up of the starting software has not been completed despite a given start-up period having elapsed since the commencement of the start-up. The software control device may control the execution priority of the running software to be decreased when the common resource accessed by the starting software and the running software is a given common resource. Thus, the start-up period for the starting software can be reduced, and the execution of software that does not significantly affect the conflict can be continued as it is, since software having a smaller conflict property is controlled after a given start-up period has elapsed.

The software control device may calculate the estimated start-up period in the conflict state between the running software and the starting software, and if the estimated start-up period exceeds a given start-up period, may control the execution priority of the running software to be decreased. Thus, the start-up period of the starting software can be reduced. Further, the execution of software that does not significantly affect can be continued as it is, since only software that affects the starting software significantly is controlled among software having a smaller conflict property.

The display area of a mobile terminal is small, for example, 320×240 pixels in quarter video graphics array (QVGA). In this case, when new software is started, all software that have been executed so far become background and are hidden from a user. Thus, the processing volume of the hidden software can be reduced to assign processing power to the starting software.

For example, it is assumed that mail software is started during execution of video player software. The video player software becomes background and the processing volume is reduced, i.e., performance decreases. As a result, a video cannot be played smoothly with frames thereof being lost; however, there is no problem since the video is hidden from the user. The software control device can reduce the performance of the video player software and assign processing power to the start-up of the mail software, thereby enabling a rapid start-up of the mail software.

The software control method according to the present embodiment may be implemented by executing a preliminarily prepared program, the program being executed by a computer such as a personal computer and a workstation. The software control program is recorded on a computer-readable recording medium such as a hard disk, a flexible disk, a CD-ROM, an MO, and a DVD and is read from the recording medium by the computer for execution. The software control program may be distributed through a network such as the Internet.

### EXPLANATIONS OF LETTERS OR NUMERALS

- 201: memory
- 202: common-resource database
- 301: conflict-property table
- 302: start-up/response period table
- 303: control instructing unit
- 304: detecting unit
- 305: release instructing unit
- 306: determining unit
- 307: control unit
- 308: release unit
- 309: extracting unit
- 310: calculating unit
- 311: detecting unit

## Claims

1. A software control device comprising:
a first detector (306) configured to detect whether starting software and running software are accessing the same common resource, the same common resource comprising a device, a system resource, or a memory (201);an extractor (309) configured to extract, from a database storing a start-up period of software in a non-conflict state and a coefficient indicating performance deterioration in a conflict state between software, a start-up period for the starting software in the non-conflict state and a coefficient indicating performance deterioration in the conflict state between the starting software and the running software;
a calculator (310) configured to calculate, based on the start-up period and the coefficient that are extracted by the extractor (309), an estimated start-up period for the starting software in the conflict state;
a second detector (304, 311) configured to:
detect that a start-up of the starting software has not been completed despite a given start-up period having elapsed since the commencement of the start-up, and
detect that the calculated estimated start-up period for the starting software in the conflict state exceeds the given start-up period; and
a controller (307) configured to:
control the running software to be temporarily suspended when the detector (306) detects that the device is started by the starting software,
control an execution priority of the running software to be decreased when the first detector (306) detects that the starting software accesses the system resource or the memory (201),
control the execution priority of the running software to be decreased when the second detector (304, 311) detects that the start-up has not been completed and the common resource is a given common resource, and
control the execution priority of the running software to be decreased when the second detector (304, 311) detects that the estimated start-up period exceeds the given start-up period.

2. A software control method for a computer that includes a first detector (306), an extractor (309), a calculator (310), a second detector (304, 311) and a controller (307), the method comprising:
detecting, by the first detector (306), whether starting software and running software are accessing the same common resource, the same common resource comprising a device, a system resource, or a memory (201);
extracting, by the extractor (309), from a database storing a start-up period of software in a non-conflict state and a coefficient indicating performance deterioration in a conflict state between software, a start-up period for the starting software in the non-conflict state and a coefficient indicating performance deterioration in the conflict state between the starting software and the running software;
calculating, by the calculator (310), based on the start-up period and the coefficient that are extracted by the extractor (309), an estimated start-up period for the starting software in the conflict state;
detecting, by the second detector (304, 311), that a start-up of the starting software has not been completed despite a given start-up period having elapsed since the commencement of the start-up;
detecting, by the second detector (304, 311), that the calculated estimated start-up period for the starting software in the conflict state exceeds the given start-up period;
controlling, by the controller (307), the running software to be temporarily suspended when it is detected at the detecting that the device is started by the starting software;
controlling, by the controller (307), an execution priority of the running software to be decreased when the first detector (306) detects that the starting software accesses the system resource or the memory (201);
controlling, by the controller (307), the execution priority of the running software to be decreased when the second detector (304, 311) detects that the start-up has not been completed and the common resource is a given common resource; and
controlling, by the controller (307), the execution priority of the running software to be decreased when the second detector (304, 311) detects that the estimated start-up period exceeds the given start-up period.

3. A computer-readable medium carrying a software control program that, when executed by a computer, causes the computer to perform the method of claim 2.

## Patentansprüche

1. Software-Steuerungsvorrichtung, die Folgendes umfasst:
eine erste Detektionseinrichtung (306), die dazu ausgestaltet ist, zu detektieren, ob die anlaufende Software und die laufende Software auf dieselbe gemeinsame Ressource zugreifen,
wobei dieselbe gemeinsame Ressource eine Vorrichtung, eine Systemressource oder einen Speicher (201) umfasst;
eine Extraktionseinrichtung (309), die dazu ausgestaltet ist, aus einer Datenbank, in welcher eine Anlaufperiode von Software in einem konfliktlosen Zustand und ein Koeffizient gespeichert sind, der die Leistungsverschlechterung in einem Konfliktzustand zwischen Software angibt, eine Anlaufperiode für die anlaufende Software in dem konfliktlosen Zustand und einen Koeffizienten zu extrahieren, welcher die Leistungsverschlechterung in dem Konfliktzustand zwischen der anlaufenden Software und der laufenden Software angibt;
eine Berechnungseinrichtung (310), die dazu ausgestaltet ist, auf der Basis der Anlaufperiode und des Koeffizienten, die durch die Extraktionseinrichtung (309) extrahiert werden, eine geschätzte Anlaufperiode für die anlaufende Software in dem Konfliktzustand zu berechnen;
eine zweite Detektionseinrichtung (304, 311), die dazu ausgestaltet ist,
zu detektieren, dass ein Anlaufen der anlaufenden Software nicht abgeschlossen wurde, obwohl eine vorgegebene Anlaufperiode seit dem Beginn des Anlaufens abgelaufen ist, und zu detektieren, dass die berechnete geschätzte Anlaufperiode für die anlaufende Software in dem Konfliktzustand die vorgegebene Anlaufperiode überschreitet; und
eine Steuerungseinheit (307), die dazu ausgestaltet ist,
die laufende Software dergestalt zu steuern, dass sie vorübergehend unterbrochen wird, wenn die Detektionseinrichtung (306) detektiert, dass die Vorrichtung durch die anlaufende Software gestartet wird,
eine Ausführungspriorität der laufenden Software dergestalt zu steuern, dass sie abgesenkt wird, wenn die erste Detektionseinrichtung (306) detektiert, dass die anlaufende Software auf die Systemressource oder den Speicher (201) zugreift,
die Ausführungspriorität der laufenden Software dergestalt zu steuern, dass sie abgesenkt wird, wenn die zweite Detektionseinrichtung (304, 311) detektiert, dass das Anlaufen nicht abgeschlossen wurde, und es sich bei der gemeinsamen Ressource um eine vorgegebene gemeinsame Ressource handelt, und
die Ausführungspriorität der laufenden Software dergestalt zu steuern, dass sie abgesenkt wird, wenn die zweite Detektionseinrichtung (304, 311) detektiert, dass die geschätzte Anlaufperiode die vorgegebene Anlaufperiode überschreitet.

2. Software-Steuerungsverfahren für einen Computer, der eine erste Detektionseinrichtung (306), eine Extraktionseinrichtung (309) und eine Berechnungseinrichtung (310), eine zweite Detektionseinrichtung (304, 311) und eine Steuerungseinheit (307) umfasst,
wobei das Verfahren Folgendes umfasst:
Detektieren, durch die erste Detektionseinrichtung (306), ob die anlaufende Software und die laufende Software auf dieselbe gemeinsame Ressource zugreifen, wobei dieselbe gemeinsame Ressource eine Vorrichtung, eine Systemressource oder einen Speicher (201) umfasst;
Extrahieren, durch die Extraktionseinrichtung (309), aus einer Datenbank, in welcher eine Anlaufperiode von Software in einem konfliktlosen Zustand und ein Koeffizient gespeichert sind, der die Leistungsverschlechterung in einem Konfliktzustand zwischen Software angibt, einer Anlaufperiode für die anlaufende Software in dem konfliktlosen Zustand und eines Koeffizienten, welcher die Leistungsverschlechterung in dem Konfliktzustand zwischen der anlaufenden Software und der laufenden Software angibt;
Berechnen, durch die Berechnungseinrichtung (310), auf der Basis der Anlaufperiode und des Koeffizienten, der durch die Extraktionseinrichtung (309) extrahiert wird, einer geschätzten Anlaufperiode für die anlaufende Software in dem Konfliktzustand;
Detektieren, durch die zweite Detektionseinrichtung (304, 311), dass ein Anlaufen der anlaufenden Software nicht abgeschlossen wurde, obwohl eine vorgegebene Anlaufperiode seit dem Beginn des Anlaufens abgelaufen ist;
Detektieren, durch die zweite Detektionseinrichtung (304, 311), dass die berechnete geschätzte Anlaufperiode für die anlaufende Software in dem Konfliktzustand die vorgegebene Anlaufperiode überschreitet;
Steuern, durch die Steuerungseinheit (307), der laufenden Software dergestalt, dass sie vorübergehend unterbrochen wird, wenn beim Detektieren detektiert wird, dass die Vorrichtung durch die anlaufende Software gestartet wird;
Steuern, durch die Steuerungseinheit (307), einer Ausführungspriorität der laufenden Software dergestalt, dass sie abgesenkt wird, wenn die erste Detektionseinrichtung (306) detektiert, dass die anlaufende Software auf die Systemressource oder den Speicher (201) zugreift;
Steuern, durch die Steuerungseinheit (307), der Ausführungspriorität der laufenden Software dergestalt, dass sie abgesenkt wird, wenn die zweite Detektionseinrichtung (304, 311) detektiert, dass das Anlaufen nicht abgeschlossen wurde, und es sich bei der gemeinsamen Ressource um eine vorgegebene gemeinsame Ressource handelt; und
Steuern, durch die Steuerungseinheit (307), der Ausführungspriorität der laufenden Software dergestalt, dass sie abgesenkt wird, wenn die zweite Detektionseinrichtung (304, 311) detektiert, dass die geschätzte Anlaufperiode die vorgegebene Anlaufperiode überschreitet.

3. Computerlesbarer Datenträger, der ein Software-Steuerungsprogramm beinhaltet, dass, wenn es durch einen Computer ausgeführt wird, den Computer veranlasst, das Verfahren nach Anspruch 2 durchzuführen.

## Revendications

1. Dispositif de commande de logiciel comprenant :
un premier détecteur (306) configuré pour détecter si un logiciel démarrant et un logiciel en fonctionnement accèdent à la même ressource commune, la même ressource commune comprenant un dispositif, une ressource de système, ou une mémoire (201) ; un extracteur (309) configuré pour extraire, à partir d'une base de données stockant une période de démarrage de logiciel dans un état de non conflit et un coefficient indiquant une détérioration de performance dans un état de conflit entre logiciels, une période de démarrage pour le logiciel démarrant dans l'état de non conflit et un coefficient indiquant une détérioration de performance dans l'état de conflit entre le logiciel démarrant et le logiciel en fonctionnement ;
un calculateur (310) configuré pour calculer, sur la base de la période de démarrage et du coefficient qui sont extraits par l'extracteur (309), une période de démarrage estimée pour le logiciel démarrant dans l'état de conflit ;
un second détecteur (304, 311) configuré pour :
détecter qu'un démarrage du logiciel démarrant n'a pas été achevé malgré une période de démarrage donnée qui s'est écoulée depuis le début du démarrage,
détecter que la période de démarrage estimée calculée pour le logiciel démarrant dans l'état de conflit dépasse la période de démarrage donnée ;
et une commande (307) configurée pour :
commander le logiciel en fonctionnement pour qu'il soit suspendu temporairement lorsque le détecteur (306) détecte que le dispositif est démarré par le logiciel démarrant,
commander une baisse de priorité d'exécution du logiciel démarrant lorsque le premier détecteur (306) détecte que le logiciel démarrant accède à la ressource de système ou à la mémoire (201),
commander une baisse de la priorité d'exécution du logiciel en fonctionnement lorsque le second détecteur (304, 311) détecte que le démarrage n'a pas été achevé et que la ressource commune est une ressource commune donnée, et
commander une baisse de la priorité d'exécution du logiciel en fonctionnement lorsque le second détecteur (304, 311) détecte que la période de démarrage estimée dépasse la période de démarrage donnée.

2. Procédé de commande de logiciel pour un ordinateur qui comprend un premier détecteur (306), un extracteur (309), un calculateur (310), un second détecteur (304, 311) et une commande (307), le procédé comprenant les étapes consistant à :
détecter, par l'intermédiaire du premier détecteur (306), si le logiciel démarrant et le logiciel en fonctionnement accèdent à la même ressource commune, la même ressource commune comprenant un dispositif, une ressource de système ou une mémoire (201) ;
extraire, par l'intermédiaire de l'extracteur (309), à partir d'une base de données stockant une période de démarrage de logiciel dans un état de non conflit et un coefficient indiquant une détérioration de performance dans un état de conflit entre logiciels, une période de démarrage pour le logiciel démarrant dans l'état de non conflit et un coefficient indiquant une détérioration de performance dans l'état de conflit entre le logiciel démarrant et le logiciel en fonctionnement ;
calculer, par l'intermédiaire du calculateur (310), sur la base de la période de démarrage et du coefficient qui sont extraits par l'extracteur (309), une période de démarrage estimée pour le logiciel démarrant dans l'état de conflit ;
détecter, par l'intermédiaire du second détecteur (304, 311), qu'un démarrage du logiciel démarrant n'a pas été achevé malgré une période de démarrage donnée qui s'est écoulée depuis le début du démarrage ;
détecter, par l'intermédiaire du second détecteur (304, 311), que la période de démarrage estimée calculée pour le logiciel démarrant dans l'état de conflit dépasse la période de démarrage donnée ;
commander, par l'intermédiaire de la commande (307), le logiciel en fonctionnement pour qu'il soit temporairement suspendu lorsqu'il est détecté au niveau de la détection que le dispositif est démarré par le logiciel démarrant ;
commander, par l'intermédiaire de la commande (307), une baisse de priorité d'exécution du logiciel en fonctionnement lorsque le premier détecteur (306) détecte que le logiciel démarrant accède à la ressource de système ou à la mémoire (201) ;
commander, par l'intermédiaire de la commande (307), une baisse de la priorité d'exécution du logiciel en fonctionnement lorsque le second détecteur (304, 311) détecte que le démarrage n'a pas été achevé et que la ressource commune est une ressource commune donnée ; et
commander, par l'intermédiaire de la commande (307), une baisse de la priorité d'exécution du logiciel en fonctionnement lorsque le second détecteur (304, 311) détecte que la période de démarrage estimée dépasse la période de démarrage donnée.

3. Support lisible par ordinateur supportant un programme de commande de logiciel qui, lorsqu'exécuté par un ordinateur, amène l'ordinateur à exécuter le procédé de la revendication 2.
